Europäisches Patentamt

European Patent Office

Office européen des brevets

(11) Veröffentlichungsnummer: **0 497 406 A1**

# EUROPÄISCHE PATENTANMELDUNG

(21) Anmeldenummer: **92200170.6**

(22) Anmeldetag: **22.01.92**

(51) Int. Cl.5: **G01L 1/25**, G01N 23/20

(30) Priorität: **31.01.91 DE 4102850**

(43) Veröffentlichungstag der Anmeldung:
**05.08.92 Patentblatt 92/32**

(84) Benannte Vertragsstaaten:
**DE FR GB NL**

(71) Anmelder: **Philips Patentverwaltung GmbH**
**Wendenstrasse 35 Postfach 10 51 49**
**W-2000 Hamburg 1(DE)**
(84) **DE**

(71) Anmelder: **N.V. Philips' Gloeilampenfabrieken**
**Groenewoudseweg 1**
**NL-5621 BA Eindhoven(NL)**
(84) **FR GB NL**

(72) Erfinder: **Eckerlin, Peter, Dr.**
**Adenauer Allee 125**
**W-5100 Aachen(DE)**
Erfinder: **Poqué, Paul-Heinz**
**Scherbergerstrasse 30**
**W-5102 Würselen(DE)**
Erfinder: **Zimmermann, Klaus-Dieter**

**Bloemendaalstraat 27**
**NL-6291 CM Vaals(NL)**
Erfinder: **Lens, Gustav Adolf**
**Malmedyerstrasse 32**
**W-5100 Aachen(DE)**
Erfinder: **Bausen, Hans-Dieter**
**I. Rote Haag Weg 8**
**W-5100 Aachen(DE)**
Erfinder: **Dettmann, Norbert**
**Am Erlenbruch 46**
**W-5120 Herzogenrath(DE)**
Erfinder: **Franzen, Erich**
**Endstrasse 6**
**W-5100 Aachen(DE)**
Erfinder: **Thomas, Jacobus**
**de Lingestraat 6**
**NL-6467 BK Kerkrade(NL)**

(74) Vertreter: **Kupfermann, Fritz-Joachim,**
**Dipl.-Ing. et al**
**Philips Patentverwaltung GmbH**
**Wendenstrasse 35 Postfach 10 51 49**
**W-2000 Hamburg 1(DE)**

(54) **Röntgenographisches Spannungsmessgerät.**

(57) Röntgenographisches Spannungsmeßgerät (10) mit fokussierender Reflexion eines divergenten Röntgenstrahls durch polykristallines Material mit einer Röntgenstrahlungsquelle (12), einer Probe (25) diesen Materials und einer Meßvorrichtung (28) auf einem Fokussierungskreis (15). Um ein einfaches und für routinemäßige Untersuchungen robust aufgebautes Meßgerät (10) zu schaffen, das bereits bei Belichtungszeiten von einigen Stunden genaue Meßergebnisse liefert, ist auf einer ebenen Grundplatte (11) am Ende einer Führungsschiene (17) ein erstes Gelenk (14) zum Verschwenken eines ersten Hebels (18) in dieser Ebene angeordnet, der seinerseits über ein zweites Gelenk (21) einen zweiten und dritten Hebel (22, 23) gleichermaßen verschwenkbar anlenkt, wobei am jeweils anderen Ende der zweite Hebel (22) die Probe (25) und der dritte Hebel (23) die Meßvorrichtung (28) trägt, der dritte Hebel (23) mit dem ersten Hebel (18) in einem bestimmten Winkel fest verbindbar und der zweite Hebel (22) entlang der Führungsschiene (17) gleitend verschiebbar ist, so daß der Einfallswinkel $\Psi$ des zur Führungsschiene (17) parallelen und oberhalb des ersten Gelenks (14) fokussierten Röntgenstrahls (13) auf der Probe (25) variiert werden kann und die Lage des Reflexes (34) auf der Meßvorrichtung (28) das Meßergebnis anzeigt.

EP 0 497 406 A1

FIG.1

Die Erfindung betrifft ein röntgenographisches Spannungsmeßgerät mit fokussierender Reflexion eines divergenten Röntgenstrahls durch polykristallines Material mit einer Röntgenstrahlenquelle, einer Probe diesen Materials und einer Meßvorrichtung auf einem Fokussierungskreis.

Spannungen in Festkörpern erzeugen Dehnungen. In kristallinen Stoffen ändern sich daher deren Netzebenenabstände, wenn von der Richtung der auf den Stoff wirkenden Kraft zu einer dazu senkrechten Richtung übergegangen wird.

Die röntgenographische Spannungsmessung beruht auf dem Braggschen Gesetz $n \lambda = 2 d \sin \vartheta$. Hierin ist $\lambda$ die Wellenlänge der verwendeten Röntgenstrahlung (meist die charakteristische Cu- oder Fe-Linie mit $\lambda = 0{,}154$ nm bzw. $0{,}194$ nm). Der Netzebenenabstand im untersuchten kristallinen Stoff ist mit d und der Beugungs- oder Reflexionswinkel mit $\vartheta$ gekennzeichnet. Die Ordnung 1, 2, ... der Beugung ist mit n bezeichnet und wird gleich 1 gesetzt. Der Herleitung dieser Formel liegt die Annahme der Interferenz der an den atomaren Netzebenen eines Kristalls gestreuten Röntgenstrahlen unter Beachtung der Wegdifferenz von einer Netzebene zur anderen als Funktion des Streuwinkels, des Winkels $\phi$ zugrunde. Da die Netzebenen und ihre Abstände diskret sind, sind bei vorgegebenen Wellenlängen auch die möglichen Beugungswinkel $\vartheta$ diskret. Da die Kristalle dreidimensional sind, handelt es sich auch um eine dreidimensionale, diskrete Verteilung der möglichen Beugungen.

Hinsichtlich der Reflexe gibt es zwei Extremfälle.

Bei einem Einkristall in einem monochromatischen Röntgenstrahl entsteht erst ein Reflex durch Drehen des Einkristalls in einen der Braggschen Gleichung entsprechenden Beugungswinkel $\vartheta$. Dabei halbiert die normale zur reflektierenden Netzebene den Winkel $\phi = 180° - 2 \vartheta$ des ein- und ausfallenden Röntgenstrahls. Die äußere Form des Einkristalls spielt dabei keine Rolle.

Ein idealer polykristalliner Gegenstand weist in jeder Raumrichtung ausgerichtete Kristallite in gleicher Häufigkeit auf. Aus diesem Grund findet selbst ein monochromatischer Röntgenstrahl immer einige Kristallite, die die Beugungsbedingung erfüllen. Die zur Reflexion führenden Kristallagen sind dabei rotationssymmetrisch um den einfallenden Röntgenstrahl verteilt, weshalb Reflexionen in allen Richtungen längs eines Kegels um den einfallenden Röntgenstrahl mit einem Öffnungswinkel von 2 $\phi$ entstehen. Dieser Kegel wird Debyekegel genannt. Auf diese Weise können bei jedem Auftreffwinkel auf einen solchen Gegenstand oder Probe alle theoretisch möglichen Reflexe entstehen, sogenannten Pulverdiagramme.

Zwischen diesen Extremfällen gibt es Übergänge, bei denen eine oder mehrere kristallographische Richtungen der Kristallite relativ zur Oberfläche der Probe bevorzugt häufig vorkommen, die sogenannten Texturen. Zu diesen gehören alle gewalzten oder gezogenen Metallbleche oder Drähte und aufgedampfte oder gesputterte dünne Schichten, d.h. zwei Materialiengruppen, für die die Spannungsmessung von großer Bedeutung ist.

Bei dünnen Schichten auf Substraten mit unterschiedlichem Ausdehnungskoeffizient oder gewalzten oder gezogenen Blechen wird angenommen, daß die Spannung parallel zur Oberfläche liegt und daß senkrecht zur Oberfläche keine Kräfte wirksam sind.

Da das Auftreten von Röntgenbeugungsreflexen streng mit der Lage der Kristallite relativ zum primären Röntgenstrahl korriliert ist, können mittels Röntgenbeugungsaufnahmen die Spannungen der Kristallite als Funktion ihrer Lage in der Schicht bestimmt werden. Dazu werden für verschiedene Einstrahlungswinkel des primären Röntgenstrahls zur Oberfläche der Probe die Peaklagen geeigneter Röntgenreflexe bestimmt. Die Spannung $\sigma$ kann dann bei Kenntnis der elastischen Konstanten aus der Steigung der relativen Netzebenenänderungen und der Funktion des Quadrats des Sinus vom Neigungswinkel $\Psi$ nach der Formel $\Delta d_\Psi / d_0 = (-(1 + \nu)/E) \sigma \sin^2 \Psi$ bestimmt werden. Darin ist $\Psi$ der Einfalls- oder Neigungswinkel der Oberflächennormalen mit der Netzebenennormalen, $d_0$ der Netzebenenabstand des entspannten Materials, $\Delta d_\Psi$ die Änderung von d durch die Spannung $\sigma$ in Richtung $\Psi$, $\sigma$ die Spannung, E der Youngs- bzw. Elastitätsmodul und $\nu$ die Poissonzahl $\Delta d_\Psi / d$ wird aus der Verschiebung $\Delta \vartheta$ des Reflexionswinkels $\vartheta_0$ nach der Formel $\Delta d_\Psi / d_0 = - \mathrm{ctg}\, \vartheta_0 \Delta \vartheta$ bestimmt.

$\Delta \vartheta$ wird nach herkömmlichen Methoden mittels eines konventionellen Diffraktomters bestimmt, wie es beispielsweise aus der Literatur "X-Ray-Diffraction Procedures, H.P. Klug, L.E. Alexander, 2. Auflage, John Wiley & Sons, Seite 755 ff." hervorgeht. Dabei befindet sich die Probe im Mittelpunkt eines Meßkreises, auf dessen Umfang der Zähler die Röntgenintensität als Funktion des Zentrumswinkels mißt (Methode nach Bragg-Brentano). Dadurch ist zwar stets gewährleistet, daß die Röntgenstrahlen senkrecht zum Zählgrad des Zählers einfallen, aber die Fokussierungsbedingung, die für scharfe Maxima bei minimalem Untergrund sorgt, ist nur für eine bestimmte Einstellung erfüllt, und zwar für den symmetrischen Fall des primären und gebeugten Röntgenstrahls zur Probenoberfläche. In allen anderen Fällen ist der Reflex defokussiert, d.h. er ist sehr breit und hebt sich nur wenig vom Untergrund ab. Lange Meßzeiten bis zu mehreren Tagen sind die Folge und die Peaklagen sind mit großen Unsicherheiten behaftet.

Aus der DE-AS 12 45 164 ist ein Diffraktionsgoniometer, insbesondere ein Röntgengoniometer bekannt, bei dem ein Zähler mit einer Hilfsvorrichtung derart verschoben wird, daß der Zählspalt stets auf einem Fokussierungskreis läuft und der Zähler auf eine Probe gerichtet ist. Nachteilig bei diesem Diffraktionsgoniometer ist, daß je nach Stellung und Neigungswinkel der Probe sich die bestrahlte Fläche ändert und damit das untersuchte Volumen der Probe. Schmale Verbindungsstücke am Übergang zweier Materialien, z.B. an einer Schweißnaht, lassen sich damit nicht untersuchen. Für Spannungsmessungen sind überdies Genauigkeiten von besser als 0,01° nötig. Dieses bekannte Diffraktionsgoniometer hat überdies einen komplizierten mechanischen Aufbau, der für hohe mechanische Stabilität kaum ausgelegt werden kann, so daß die hohen Genauigkeitsanforderungen nur schwer erfüllbar sind.

Aus "W. Wallace and T. Terada, X-Ray Measurements of Surface Residual Stresses in cold rolled α-Brass Vol. 14, Plenum Press, New York, 1971, p. 389, insbesondere Seite 393", ist ein modifiziertes Bragg-Brentano-Diffraktometer bekannt, in welchem ein Meßspalt für jede Neigung eines Präparates auf die Stellung des Fokus gefahren wird. Die Messung geschieht nicht längs eines Fokussierungskreises, sondern auf einem Kreisbogen um das Präparat (entsprechend der Bragg-Brentano-Anordnung).

Nachteilig ist, daß die bestrahlte Fläche der Probe sich ebenfalls ändert und die Messung außer für den Winkel $\Psi = 0$ nicht längs des Fokussierungskreises durchführbar ist, sondern je nach Neigung mehr oder weniger quer dazu. Zur exakten Einstellung des Zählers müßte also die Lage des Maximums a priori bekannt sein, um wirklich unverbreiterte Reflexe zu erhalten. Ferner ist die Einstellung des Zählers für die jeweilige Einstellung aufwendig und deshalb für Routinearbeiten nicht geeignet. Die Meßgenauigkeit der Peaks entspricht derjenigen eines normalen Bragg-Brentano-Diffraktometers und ist daher für verläßliche Messungen nur bedingt geeignet. Kritisch erscheint vor allem auch, daß bei starker Neigung der Probe zum Primärstrahl der Zähler weit herausgefahren werden muß, wobei dessen Träger durch Verbiegen gefährdet ist, was zu Fehlern führen kann.

Aus der EP-B1-0 118 932 ist ein Röntgenanalysegerät bekannt, mit dem einige diffraktometrische Aufgaben gelöst werden können, u.a. auch Spannungsmessungen. Ein Präparat wird dabei in jeder Stellung in gleicher Breite bestrahlt und ein Zähler befindet sich stets auf einem Fokussierungskreis. Durch eine Zusatzvorrichtung muß der Zähler in Richtung der Probe ausgerichtet werden. Da der Probenraum relativ klein ist, ist dieses Gerät für große und dicke Proben wenig geeignet. Ferner kann das Gerät nur mit einem Röntgenmonochromator verwendet werden. Daraus resultieren einerseits hohe Peak-/Untergrundverhältnisse, andererseits eine reduzierte Röntgenintensität und lange Belichtungszeit. Das Gerät scheint für Forschungszwecke gut geeignet zu sein, weniger jedoch für den Routinebetrieb.

Die zuletzt beschriebenen drei bekannten Geräte weisen ferner noch den Nachteil auf, daß sie Zähler verwenden, die die Intensität des Röntgenreflexes längs des Meßspaltes integrieren, so daß die Information über die Kristallitgröße verlorengeht. Ferner bewegt sich während der Messung nicht nur der Zähler, um den Winkelbereich abzutasten, sondern das Präparat dreht sich ebenfalls, wodurch sich der Neigungswinkel $\Psi$ nachteilig zum Röntgenstrahl ändert.

Ferner ist aus der DE-OS 38 39 990 A1 eine Vorrichtung zur röntgenographischen Abbildung und Messung lokaler Spannungsverteilungen bekannt. Größere Werkstücke werden dabei auf einer beweglichen Vorrichtung gehalten und letztlich mit einem primären Röntgenstrahlenbündel bestrahlt. Aus der von der bestrahlten Strecke der Probe abgebeugten charakteristischen Röntgenstrahlung wird ein für die Spannungsbestimmung geeigneter Röntgenreflex ausgewählt, und ein flächenhafter Röntgendetektor wird auf die zugehörige Beugungsrichtung mittels Drehung eingerichtet. Vor dem Röntgendektektor sind Sollerblenden angeordnet, die nur äquatoriale Teilstrahlen passieren lassen, wodurch das eigentlich verwaschene Beugungsbild der Probenstrecke deutlich vereinfacht wird, so daß es anschließend nach Digitalisierung ausgewertet werden kann. Wegen des an sich verwaschenen Beugungsbildes sind auch bei dieser Vorrichtung lange Meßzeiten zu erwarten.

Der Erfindung liegt die Aufgabe zugrunde, ein röntgenographisches Spannungsmeßgerät zu schaffen, das einfach und robust für routinemäßige Untersuchungen aufgebaut ist und bereits bei Belichtungszeiten von einigen Stunden genaue Meßergebnisse liefert.

Erfindungsgemäß wird diese Aufgabe dadurch gelöst, daß auf einer ebenen Grundplatte am Ende einer Führungsschiene ein erstes Gelenk zum Verschwenken eines ersten Hebels in dieser Ebene angeordnet ist, der seinerseits über ein zweites Gelenk einen zweiten und dritten Hebel gleichermaßen verschwenkbar anlenkt, wobei am jeweils anderen Ende der zweite Hebel die Probe und der dritte Hebel die Meßvorrichtung trägt, der dritte Hebel mit dem ersten Hebel in einem bestimmten Winkel fest verbindbar und der zweite Hebel entlang der Führungsschiene gleitend verschiebbar ist, so daß der Einfallswinkel $\Psi$ des zur Führungsschiene parallelen und oberhalb des ersten Gelenks fokussierten Röntgenstrahls auf der Probe variiert und die Lage des Reflexes auf der Meßvorrichtung das Meßergebnis anzeigt.

Die Notwendigkeit, trotz kurzer Belichtungszeiten scharfe und mit hoher Genauigkeit vermeßbare Reflexe zu erhalten, führte in der Röntgenbeugung zur Entwicklung einer fokussierenden Kamera (H. Seemann, Ann. Physik, 59, 455 (1919) und H. Bohlien, Ann. Physik, 61, 421 (1920)).

Die Methode dieser Seemann-Bohlin-Kamera ist, daß die Probe und der Film auf dem Umfang eines Fokussierungskreises liegen, der durch einen Primärfokus geht. Als Primärfokus wird ein scharfer Linienfokus senkrecht zum Fokussierungskreis, d.h. parallel zu dessen Kreisfläche verwendet, der einen Fächer aus Röntgenstrahlen zum Präparat schickt. Der Öffnungswinkel dieses Fächers ist die Divergenz, die durch die Größe des Präparats bestimmt wird und mehrere Grad betragen kann. Der Öffnungswinkel der Röntgenstrahlen quer zum Fokussierungskreis, also aus ihm heraus, wird dessen Querdivergenz genannt und durch Parallelschlitze, sogenannte Sollerblenden begrenzt. Die Vermessung des Films ergibt den Winkel $2\phi$, weshalb diese Aufnahmetechnik eine hohe Auflösung besitzt. Für die Spannungsmessung ist diese Seemann-Bohlin-Technik nicht nur wegen ihrer hohen Auflösung, die Schärfe der Reflexe, den leichten Zugang zu den hohen Beugungswinkeln und der hohen Intensität der Reflexe interessant, sondern insbesondere durch die Möglichkeit, den Röntgenstrahl unter verschiedensten Winkeln zur Kreistangente des Fokussierungskreises einfallen zu lassen, was bislang nirgends ausgenutzt wurde.

Zum Verständnis werden nochmals die Fixpunkte des Fokussierungskreises, nämlich der Primärfokus, der Bildfokus und der Vertex des Beugungswinkels betrachtet. Von diesen drei liegen im Raum bei konventionellen Verhältnissen nur der Primärfokus in der Röntgenröhre fest. Das bedeutet, daß der gesamte Fokussierungskreis mit Präparat und Bildfokus erfindungsgemäß um den Primärfokus gedreht werden kann, ohne daß sich dabei die Lage des Bildfokus auf dem Fokussierungskreis verändert. Allerdings durchfährt bei dieser Drehung der Fokussierungskreis den Primärstrahl und schneidet diesen dabei unter verschiedensten Winkeln. Dies nun ist ein erfindungsgemäß entscheidender weiterer Punkt, denn hiermit ist es möglich, den Einfallswinkel auf die Probe innerhalb der möglichen Grenzen zu variieren.

Wie bereits ausgeführt, liegen erfindungsgemäß die Röntgenstrahlenquelle, das Präparat und die Meßvorrichtung auf einem Fokussierungskreis. Die Winkelauflösung der Reflexe ist dabei sehr hoch. Vier Grad auf dem Fokussierungskreis entsprechen einem Grad des Beugungs- oder Reflexionswinkels $\vartheta$. Für die Spannungsmessung wird nur der Fall der Rückstreuung benutzt.

Wesentlich beim erfindungsgemäßen Spannungsmeßgerät ist, daß die komplette Kamera, also letztlich der Fokussierungskreis um den Fokussierungspunkt des primären Röntgenstrahls, dieser entspricht der Lage des ersten Gelenks, diskontinuierlich geschwenkt wird. Dabei wird die Probe derart nachgeführt, daß sie stets im primären Röntgenstrahl und gleichzeitig exakt auf dem Fokussierungskreis bleibt. Die Registriereinheit, z.B. der Film auf einer Meßvorrichtung, ist fest mit dem Meßgerät verbunden und dreht sich somit ebenfalls um den Fokussierungspunkt. Bei dieser Drehung ändert sich der Einfallswinkel $\Psi$ des Röntgenstrahls auf der Oberfläche der Probe, so daß die Gitterkonstante d der Probe als Funktion des Einfallswinkels $\Psi$ bestimmt werden kann. Im symmetrischen Fall, d.h. Einfallswinkel gleich Ausfallswinkel, wird die Gitterkonstante d senkrecht zur Oberfläche der Probe, also $d_0$ bestimmt. Die Lage des Reflexes des zugehörigen Beugungswinkels $\vartheta_0$ dient zur Kallibrierung und als Bezugspunkt der Registriereinheit, also der Meßvorrichtung.

Gemäß einer besonderen Ausgestaltung der Erfindung kann die Röntgenstrahlenquelle oder der Fokus des primären Röntgenstrahls eine etwa 5 bis 15 mm lange Linie sein. Dieser Fokus soll möglichst scharf sein, d.h. die Linie muß schmal, vorzugsweise kleiner als 0,1 mm sein. Senkrecht zum Fokussierungskreis bzw. der Grundplatte soll vorteilhaft die Divergenz des Röntgenstrahls kleiner als vier Grad sein.

Beispielsweise kann eine Schlitzblende für ungebündelte Röntgenstrahlen auf dem Fokussierungskreis angeordnet sein. Innerhalb oder außerhalb des Fokussierungskreises kann die Querdivergenz durch Sollerblenden begrenzt sein. Als Röntgenröhre kann eine Breitfokusröntgenröhre mit möglichst hoher Belastbarkeit dienen. Ein entsprechendes Gerät ist am einfachsten zu bauen und zu justieren.

In einer bevorzugten Ausführung kann auch der Elektronenstrahlfokus auf der Anode einer Röntgenröhre als Fokussierungslinie verwendet werden. Hierfür eignen sich Feinfokusröntgenröhren mit einer Fokusbreite von ca. 0,8 mm sehr gut. Durch perspektivische Verkürzung unter einem Aufsichtswinkel von beispielsweise weniger als sechs Grad wird die benötigte Fokusschärfe erreicht. Die Querdivergenz wird z.B. durch Sollerblenden begrenzt. Eine solche Anordnung ergibt eine hohe Intensität.

Ferner kann als Fokus der Fokus eines Röntgenmonochromators dienen. Gute Einkristalle in Verbindung mit feinen Primärstrahlfokussen ergeben nicht nur den benötigten Fokus mit der geeigneten Querdivergenz, sondern gestatten auch beispielsweise die Eliminierung der $\alpha 2$-Komponente der $K_\alpha$-Strahlung. Diese Anordnung gewährleistet ein hohes Peak-/Untergrundverhältnis.

Die zu untersuchende Probe kann ein ebenes Blech, ein ebener, massiver Block oder eine oder mehrere dünne Schichten auf einem ebenen Substrat sein. Um eine hohe Dispersion und damit Genauigkeit zu erhalten, ist es erfindungsgemäß vorgesehen, daß ein scharfer Reflex mit einem Beugungswinkel $\vartheta$ von mehr als 45° existiert. Der Beugungswinkel $\vartheta$ sollte dabei möglichst nahe bei 90° liegen. Als geeignete Röntgenstrahlung hierfür bieten sich vorteilhaft die charakteristischen Linien der handelsüblichen Feinstrukturröntgenröhren (Cu, Ni, Co, Fe, Cr und u.U. auch Mo) an. Durch diese Auswahl ist es in der Regel möglich, einen geeigneten Reflex zu bilden.

Die Probe kann in der Regel nicht entsprechend der Krümmung des Fokussierungskreises gebogen werden, weshalb sie vorteilhaft tangential anliegt. Bei kleinen Divergenzwinkeln des Röntgenstrahls von 0,5° oder kleiner, ist die Abweichung vom Fokussierungskreis so klein, daß die Reflexe durch diese Abweichung nur wenig verbreitert werden. Größere Werte ergeben dabei größere bestrahlte Flächen und höhere Intensitäten. Die Probe liegt erfindungsgemäß auf dem zweiten Hebel, der dem Radius des Fokussierungskreises entspricht, d.h. die Probe dreht sich um dessen Mittelpunkt, das zweite Gelenk. Dadurch wird erfindungsgemäß die genaue Führung auf dem Fokussierungskreis garantiert. Die Lage der Probe im Röntgenstrahl wird bei Verschiebung erfindungsgemäß durch die Führungsschiene sichergestellt.

Wie bereits ausgeführt wurde, muß die Registrierung der Reflexe auf der Meßvorrichtung, die bei den verschiedenen Einfallswinkeln des Röntgenstrahls auf die Oberfläche der Probe entstehen, auf dem Fokussierungskreis erfolgen, um scharfe Reflexe mit unverfälschter Lage der Maxima und hohen Peak-/Untergrundverhältnissen bei geringen Belichtungszeiten zu gewährleisten.

In einer einfachsten bevorzugten Ausführung der Erfindung ist auf der Meßvorrichtung ein fotografischer Film angeordnet, der gut an die Krümmung des Fokussierungskreises angepaßt werden kann. Für die Länge des Films in Richtung des Fokussierungskreises genügt ein Wert, der ein bis 2 Grad des Beugungswinkels $\vartheta$ entspricht. Der Film ist derart dünn, daß die Reflexe trotz schiefen Einfalls auf dem Film scharf abgebildet werden. Bei niedrigem Untergrund lassen sich mehrere Aufnahmen mit verschiedenen Einfallswinkeln übereinander aufnehmen, so daß die Änderungen des Beugungswinkels $\Delta\vartheta$ gegenüber $\vartheta_0$ direkt vermessen werden können. Aus der benötigten Auflösung kann der Radius des Fokussierungskreises berechnet werden. Soll die Peak-Lage auf 0,02° des Beugungswinkels $\vartheta$ genau bestimmt werden und kann auf 0,1 mm genau vermessen werden, so muß der Radius z.B. 71,62 mm betragen (d.h. 1 mm Film entspricht 0,2° des Beugungswinkels $\vartheta$).

Ist der Untergrund hoch oder die Trennung der Reflexe zu gering, so wird der Film orthogonal zum Fokussierungskreis bzw. zur Grundplatte um etwa 2/3 oder mehr der Höhe eines Reflexes je Belichtung verschoben. Hierzu ist die Meßvorrichtung mit einer entsprechend verschiebbaren automatisch über eine Steuervorrichtung ansteuerbaren Halterung für den Film versehen.

Gemäß einer Ausgestaltung der Erfindung kann auch die Registrierung mit Röntgenquantenzählern erfolgen. Hierbei wird der Zählschlitz auf dem Fokussierungskreis entlanggeführt. Dabei zeigt der Zähler nicht zum Mittelpunkt des Fokussierungskreises sondern in Richtung der Probe, damit der Röntgenstrahl möglichst vollständig absorbiert wird. Bei einer derartigen Ausgestaltung der Erfindung ist zu beachten, daß eine Drehung von einem Grad des dritten Hebels einer Winkeländerung von vier Grad des Beugungswinkels $\vartheta$ entspricht. Ortsempfindliche Zähler sind dagegen nicht geeignet, es sei denn, daß die Absorption der Röntgenquanten in einer sehr dünnen Schicht erfolgt.

Der Aufbau und die Justierung des erfindungsgemäßen Spannungsmeßgerätes wird vorteilhaft wie folgt angegeben:

Der Fokussierungskreis liegt parallel zur Grundplatte. Die einstellbaren Beugungswinkel $\vartheta$ sind z.B. auf der Grundplatte mittels einer Gravur aufgetragen. Sie beginnen mit 0° am Primärfokus, d.h. dem ersten Gelenk und erreichen diametral gegenüber 90°. Der Reflex oder umgelenkte Röntgenstrahl selbst liegt beim zweifachen des Beugungswinkels $\vartheta$. Am ersten Hebel sind der zweite und dritte Hebel angeordnet, welche beide um den Mittelpunkt des Fokussierungskreises über das zweite Gelenk in der Ebene der Grundplatte drehbar sind. Sie können über eine Luftlagerung und zusätzliche Stützen darauf beweglich abgestützt sein. Die Luftlagerung kann während der eigentlichen Messung unterbrochen sein.

Der zweite Hebel weist an seinem äußeren Ende eine Halterung zur Aufnahme der Probe auf und der dritte Hebel an seinem äußeren Ende die Meßvorrichtung mit beispielsweise dem Film. Alle beweglichen Hebel sind z.B. über die Luftlagerung derart beweglich, daß eine sichere Einstellung auf dem Fokussierungskreis schnell und zuverlässig vorgenommen werden kann. Der erste Hebel ist an der Stelle des Primärfokus, also dem ersten Gelenk, drehbar. Der Winkel zum Primärstrahl ist 90°-$\vartheta$ + $\Psi$. Parallel zum Röntgenstrahl, ausgehend vom ersten Gelenk, ist auf der Grundplatte eine Führungsschiene angeordnet, die den zweiten Hebel und somit die Probe im Röntgenstrahl führt. Der zweite Hebel ist deshalb über das zweite Gelenk drehbar gelagert. Für den dritten Hebel, der die Meßvorrichtung trägt, ist ein Feststellelement vorhanden, das es ermöglicht, diesen dritten Hebel bei einer Film- oder anderen Registrierung bei dem erforderlichen Wert von $2 \vartheta$ fest mit dem ersten Hebel zu verbinden oder, bei abtastender Zählung, den Ausgangspunkt des Zählers besser als 0,01° des Beugungswinkels $\vartheta$ reproduzierbar einzustellen, so daß die Aufnahmen bei verschiedenen Einstellwinkeln vergleichbar sind.

Die Justierung an den Röntgenstrahl erfolgt vorteilhaft durch zwei Einstellungen. Der zweite Hebel mit der Probe wird hierzu auf einen Beugungswinkel $\vartheta$ von 90° eingestellt und die Probe mit einem Fluoreszenzfilm versehen. In den Mittelpunkt des Fokussierungskreises, also auf das zweite Gelenk, kommt eine schmale Schlitzblende. Durch Verstellen von Justier- oder Stellschrauben der Röntgenstrahlenquelle wird das Meßgerät derart eingestellt, daß ein scharfer Lichtfleck genau auf die Stelle des Beugungswinkels $\vartheta$ von 90° fällt. Damit ist bereits die genaue Winkellage definiert; die Justierung senkrecht zu dieser Richtung hat nur Einfluß auf die Linienschärfe. Hierzu macht man zweckmäßigerweise Aufnahmen einer Substanz mit scharfen Reflexen bei verschiedenen Stellungen der Justierschraube und wählt die Stellung mit dem schärfsten Reflex.

Zur Bestimmung des Faktors $(1 + \nu)\, \sigma/E$ aus der eingangs genannten Gleichung, wird die Probe in den Halter der Probe eingesetzt und der zweite Hebel auf einen Beugungswinkel $\vartheta_0$ geschoben. Die Meßvorrichtung mit dem Film wird über den dritten Hebel auf einen Beugungswinkel von $2\vartheta_0$ geschoben und dort gegenüber dem ersten Hebel festgelegt. Es kann nun die erste Aufnahme erfolgen. Diese ergibt den Bezugswert für die folgenden Aufnahmen, denn sie entspricht dem Gitterabstand d senkrecht zur Oberfläche der Probe. Daran anschließend kann die Probe um z.B. 10° auf der Gravur der Beugungswinkel-Skala verdreht werden. Dies entspricht jeweils einem $\Psi$-Wert von gleicher Größe. Es folgt die nächste Aufnahme wie bereits beschrieben. Durch eine Wiederholung von einigen z.B. drei oder vier solcher Aufnahmen, kann die Auswertung erfolgen, indem $\Delta\vartheta$ nach der vorgenannten Gleichung in $\Delta d_\Psi/d_0$ umgerechnet und die Steigung der Kurve von $\Delta d_\Psi/d_0$ gegen $\sin^2\vartheta$ bestimmt wird. Die Beugungswinkeländerung $\Delta\vartheta$ muß möglichst genau gemessen werden, während für die Einstellung des Präparats auf den Beugungswinkel $\vartheta$ und der Differenz $\vartheta \pm \Psi$ sowie $2\vartheta$ für die Registriervorrichtung z.B. 0,1° des Beugungswinkels $\vartheta$ ausreichen.

Für Aufnahmen mit monochromatisierter Strahlung sollte die subtraktive Aufstellung gewählt werden, damit schärfere Reflexe entstehen.

Gemäß einer bevorzugten Ausgestaltung der Erfindung, kann das Spannungsmeßgerät mit einer Heiz- oder Kühlvorrichtung für die Probe versehen sein. Die Heizung kann durch eine durch elektrischen Strom geheizte Auflage der Halterung verwirklicht sein. Die Temperaturkontrolle kann über ein Thermoelement erfolgen und die Messung ebenfalls über ein Thermoelement oder durch optische Pyrometrie.

Mit einer entsprechend modifizierten Halterung der Probe kann beispielsweise der Ausdehnungskoeffizient eines entspannten Materials bestimmt werden. Hierzu werden in der Stellung mit einem Beugungswinkel $\vartheta$ von der Probe Aufnahmen bei verschiedener Temperatur hergestellt, die, wie bereits ausgeführt, zu einem Wert von $\Delta d/d$ führen, der zur Ermittlung des Ausdehnungskoeffizienten $\alpha$ durch einen Wert $\Delta T$ dividiert wird. Die Temperaturdifferenz $\Delta T$ ist dabei $T - T_0$.

Ferner können temperaturabhängige Änderungen des Dehnungs- und Spannungszustandes erfaßt werden. Dies ist vorteilhaft, wenn bei der Herstellung von Proben bei erhöhter Temperatur Spannungen entstehen.

Ferner können elastische Konstanten bestimmt werden.

Beim erfindungsgemäßen Spannungsmeßgerät ist vorteilhaft die bestrahlte Oberfläche der Probe konstant. Die Messung erfolgt auf dem Fokussierungskreis. Das Gerät besitzt eine hohe mechanische Steifigkeit mit größter Leichtgängigkeit, so daß höchste Zuverlässigkeit und Genauigkeit der Meßwerte garantiert ist. Die Meßunsicherheit ist bei nicht monochromatisierter Röntgenstrahlung etwa viermal kleiner als die, die mit dem Bragg-Brentano-Diffraktometer zu erreichen ist. Die Probe kann während der Messung stehen oder auch wahlweise längs des Fokussierungskreises oszillieren. Letzteres ist bei großen Kristalliten vorteilhaft, welche keine gleichförmigen sondern gepunktete Debyelinien ergeben. Statt eines Zählers wird vorteilhaft ein Filmstreifen zur Registrierung verwendet, der alle Informationen des Debyekegels wiedergibt. Der Film kann wahlweise durch einen ortsempfindlichen Zähler auf Festkörperbasis zur Vermeidung der Parallaxe ersetzt werden. Ist dieser Zähler eindimensional, so gehen natürlich alle Zusatzinformationen des Films verloren. Allerdings können mit einem solchen Zähler alle Möglichkeiten der automatischen Auswertung mit einem Computer ausgenutzt werden.

Die Halterung für die Probe ist großzügig bemeßbar und es kann auch eine Halterung vorgesehen sein, die um eine Achse senkrecht zur Probenoberfläche schwenkbar ist, zur Ermittlung von Texturen oder Spannungen in anderen Richtungen der Probe. Ferner kann eine Heiz- oder Kühlvorrichtung in der Halterung der Probe zur Bestimmung von Phasenänderungen, Ausdehnungskoeffizienten oder vorzugsweise Spannungsänderungen als Funktion der Temperatur vorhanden sein, wodurch es möglich wird, Elastizitätskoeffizienten zu bestimmen. Ferner können Proben mit Gewichten bis zu mehreren Kilogramm und Formen jeglicher Art untersucht werden.

Weitere vorteilhafte Ausgestaltungen der Erfindung ergeben sich aus den Unteransprüchen.

Ein Ausführungsbeispiel der Erfindung ist anschließend anhand einer Zeichnung mit mehreren Fig. näher erläutert. Es zeigt:

Fig. 1    eine perspektivische Ansicht eines erfindungsgemäßen röntgenographischen Spannungsmeßgeräts,

Fig. 2    eine schematisierte prinzipielle Darstellung von verschiedenen Winkelverhältnissen, und

Fig. 3    eine schematische Draufsicht auf den für unterschiedliche Aufnahmen verschobenen Fokussierungskreis.

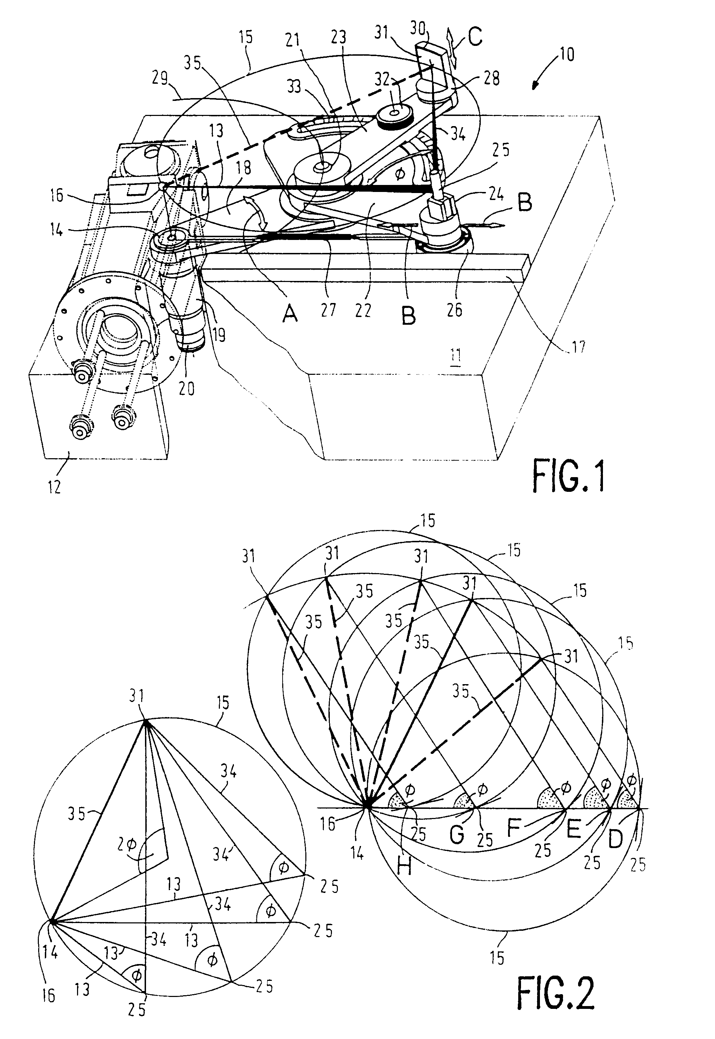

Fig. 1 zeigt eine perspektivische Ansicht eines erfindungsgemäßen röntgenographischen Spannungsmeßgerätes 10, das im wesentlichen oberhalb einer ebenen Grundplatte 11 aufgebaut ist. Die Grundplatte 11 ist eine polierte Granitplatte, neben der eine Röntgenstrahlungsquelle 12 angeordnet ist, dessen primärer Röntgenstrahl 13 durch eine nicht dargestellte Schlitz- und Sollerblende begrenzt und oberhalb der Grundplatte 11 auf einer gedachten orthogonal zur Grundplatte 11 verlaufenden Achse eines ersten Gelenks 14 in einen Fokussierungskreis 15 gelenkt ist. Die Röntgenstrahlungsquelle 12 mit einer den Fokussierungspunkt bildenden Anode 16 und der Röntgenstrahl 13 können durch eine Justiervorrichtung der Röntgenstrahlenquelle 12 in der Ebene der Grundplatte 11 senkrecht und parallel derart verschoben werden, so daß der Röntgenstrahl 13 parallel zu einer Führungsschiene 17 verläuft, die oberhalb der Grundplatte 11 angeordnet ist und dessen eines Ende in der Nähe des ersten Gelenks 14 und dessen anderes Ende am äußeren Rand der Grundplatte 11 endet.

Über das Gelenk 14 ist ein erster Hebel 18 in Richtung des Pfeils A verschwenkbar mit der Grundplatte 11 verbunden, d.h. der Hebel 18 kann auf der Oberfläche der Grundplatte 11 um die Achse des ersten Gelenks 14 verschwenkt werden. Hierzu kann ein Motor 19 mit einem Winkelkodierer 20 verwendet werden, die in einer entsprechenden Öffnung der Grundplatte 11 gelagert und von einer nicht dargestellten Steuereinrichtung angesteuert werden können.

An dem dem ersten Gelenk 14 gegenüberliegenden Ende des ersten Hebels 18 ist ein zweites Gelenk 21 angeordnet, dessen Drehachse ebenfalls orthogonal zur Grundplatte ausgerichtet ist. Über dieses Gelenk 21 sind zwei weitere Hebel 22 und 23 mit dem ersten Hebel 18 schwenkbar verbunden. Der zweite Hebel 22 weist an seinem dem zweiten Gelenk 21 abgekehrten Ende eine Halterung 24 auf, mit der eine Probe oder ein Präparat 25 gehalten wird. Dieses Ende des zweiten Hebels 22 weist ferner einen Gleitmechanismus 26, z.B. ein Lager auf, mit welchem der zweite Hebel 22 relativ zur Führungsschiene 17 an dieser in Richtung der Pfeile B auf das erste Gelenk 14 zubewegt und von diesem wegbewegt werden kann. Mittels einer Spannvorrichtung 27 zwischen dem ersten Gelenk 14 und dem äußeren Ende des zweiten Hebels 22, wird dieser Bereich, d.h. das Lager 26 seitlich gegen die Führungsschiene 17 gedrückt.

Der dritte Hebel 23 weist an seinem dem zweiten Gelenk 21 abgekehrten Ende eine Meßvorrichtung 28 auf, die eine in Richtung des Pfeils C verschwenkbare Halterung 30 für beispielsweise einen Film 31 aufweist. Über ein Feststellelement 32 kann der dritte Hebel 23 gegenüber dem ersten Hebel 18 in einer bestimmten Winkelposition arretiert werden. Die Winkelposition kann an einer Gravur 33 abgelesen werden.

Zur Stabilisierung und leichten Verschiebung aller Hebel 18, 22 und 23 sind nicht dargestellte Stützen mindestens unter dem zweiten Gelenk 21 und dem zweiten Hebel 22 vorhanden und mit einer Luftlagerung ausgerüstet, so daß beim Verschieben die Hebel 18, 22 und 23 auf einem Luftpolster über die Oberfläche der Grundplatte 11 gleiten. Ist die gewünschte Meßposition erreicht, dann wird über die Steuervorrichtung die Luftzufuhr unterbrochen, so daß die Hebel 18, 22 und 23 letztlich direkt auf der Grundplatte 11 aufliegen, wodurch eine gute Stabilität während der Messung erzielt wird. Die drei Hebel 18, 22 und 23 weisen die gleiche Lange auf, weshalb ihr jeweils äußeres Ende, d.h. das erste Gelenk 14, die Halterung 24 und Meßvorrichtung 28 jeweils auf dem Fokussierungskreis 15 liegen. Der Röntgenstrahl 13 trifft auf die Probe 25 und wird von dieser umgelenkt, so daß ein umgelenkter Röntgenstrahl 34 auf den Film 31 der Meßvorrichtung 28 trifft, der sich ebenfalls auf dem Fokussierungskreis befindet und manuell oder automatisch von einer nicht dargestellten Auswertevorrichtung ausgewertet werden kann. Der einfallende Röntgenstrahl 13 und der umgelenkte Röntgenstrahl 34 bilden einen Winkel $\phi$ miteinander, dessen spannungsbeeinflußte Änderungen $\Delta\phi$ gemessen werden sollen.

Aufgrund der eingangs genannten Gleichung können alle Messungen an der Probe 25 selbst vorgenommen werden. Um die Spannung $\sigma$ mit hinreichender Sicherheit bestimmen zu können, muß der Bereich, über dem die Steigung gemessen werden kann, d.h. der Bereich des Neigungswinkels $\Psi$ genügend groß sein und die relative Änderung des Netzebenenabstandes $\Delta d_\Psi$ muß genau gemessen werden. Beide Bedingungen können erfüllt werden, wenn der Beugungswinkel $\vartheta$ nahe an 90° liegt. Die mögliche Neigung der Probe 25 ist nämlich begrenzt durch die beiden Lagen, wo entweder der primäre Röntgenstrahl 13 oder der Reflex 34 parallel zur Oberfläche der Probe 25 liegen, so daß die Strahlung vollständig absorbiert wird. Bei hohen Beugungswinkeln $\vartheta$ steht der primäre Röntgenstrahl 13 im symmetrischen Fall nahezu senkrecht zur Probe 25 und die Neigungsmöglichkeit ist am größten.

Wie bereits erwähnt, führte die Notwendigkeit, trotz kurzer Belichtungszeiten, d.h. großer Divergenz des Primärstrahls 13 und daher großer beleuchteter Oberfläche des Präparats 25, scharfe mit hoher Genauigkeit vermeßbare Reflexe 34 zu bekommen, zur Entwicklung eines fokussierenden Meßgeräts. Diese Methode wurde in der Röntgenbeugung, nicht aber bei der Spannungsmessung angewandt.

Der Kreisbogen 29 zeigt die Bahn des zweiten Gelenks 21 um das erste Gelenk 14 bei Verschiebung des zweiten Hebels 22 entlang der Führungsschiene 17.

Fig. 2 verdeutlicht diese Methode. Verbindet man den Ausgangspunkt des Röntgenstrahls 13 der Röntgenröhre 12, dies ist der Primärfokus in der gedachten verlängerten Achse des ersten Gelenks 14, bzw. die dort angebrachte Anode 16 durch eine Gerade 35 (siehe auch Fig. 1) mit dem Bildpunkt auf dem Film 31, an dem der gebeugte Röntgenstrahl 34 auftrifft, welcher auch als Bildfokus bezeichnet ist, so kann nach dem geometrischen Ort aller Punkte gefragt werden, die über dieser Geraden 35 den gleichen Winkel $\phi$ aufspannen. Dieser Winkel $\phi$ berechnet sich zu 180° - 2$\vartheta$ und der geometrische Ort ist die Lage der reflektierenden Probe 25. Wird dieser Ort gefunden, so laufen alle Reflexe 34, von welcher Stelle sie auch kommen, durch den Bildfokus. Durch diese Methode wird im Idealfall der Primärfokus im Bildfokus abgebildet, egal wie groß die Divergenz und die reflektierende Oberfläche der Probe 25 auch sind. Die Antwort dieses Problems leuchtet ein, wenn man die Gerade 35 als eine Kreissehne betrachtet, deren Umfangswinkel auf dem zugehörigen Kreisumfang zueinander alle gleich sind.

Der Kreis ist dann gegeben durch den Ort des Primärfokus, des Bildfokus und den Vertex des Beugungswinkels, dabei kann der Vertex auf dem Kreisumfang beliebig verschoben werden, weil der Winkel $\phi$ der gleiche bleibt. Verschiebt man jedoch die Lage des Bildfokus auf dem Kreis, so ändert sich der Winkel des Vertex, mithin ist es nicht nur möglich, einen einzigen Reflex in einem Bildpunkt zu fokussieren, sondern jeder mögliche Reflex bildet seinen eigenen Bildfokus. Alle Reflexe werden als Bild des Primärfokus auf dem Fokussierungskreis 15 abgebildet. Wird zusätzlich zum Sehnensatz noch berücksichtigt, daß der Mittelpunktswinkel 2$\phi$ dem doppelten Winkel $\phi$ am Umfang entspricht, so ist die Methode vollständig. Die Probe 25 und der Film 31 liegen demnach auf dem Fokussierungskreis 15, der gleichzeitig durch den Primärfokus oberhalb des Gelenks 14 geht. Als Primärfokus wird ein scharfer Linienfokus senkrecht zum Fokussierungskreis 15 verwendet, mit einer Breite kleiner als 0,1 mm, der einen Fächer aus Röntgenstrahlen 13 zum Präparat 25 schickt. Der Öffnungswinkel dieses Fächers ist die Divergenz und wird durch die Größe des Präparats 25 bestimmt und kann mehrere Grad betragen. Den Öffnungswinkel der Röntgenstrahlen 13 quer zum Fokussierungskreis nennt man dessen Querdivergenz und begrenzt diese durch Parallelschlitze, sogenannte Sollerblenden, auf weniger als 5°.

Die Vermessung bzw. Auswertung des Films 31 ergibt somit den Winkel 2$\phi$. Diese Methode besitzt somit eine hohe Auflösung. Interessant ist diese Methode jedoch nicht nur wegen ihrer hohen Auflösung, der Schärfe der Reflexe, dem leichten Zugang zu hohen Beugungswinkeln $\vartheta$ und der hohen Intensität der Reflexe 34, sondern auch wegen der Möglichkeit, den primären Röntgenstrahl 13 unter verschiedenen Winkeln zur Kreistangente einfallen zu lassen. Gerade diese Möglichkeit ist im Stand der Technik unberücksichtigt geblieben. Der Fokussierungskreis 15 wird somit durch den Primärfokus, den Bildfokus und den Vertex des Beugungswinkels bestimmt. Von diesen Punkten liegt nur der Primärfokus im Raum fest. D.h., daß der gesamte Fokussierungskreis 15 mit Präparat 25 und Bildfokus 31 um den Primärfokus gedreht werden kann, ohne daß die Lage des Bildfokus 31 auf dem Fokussierungskreis 15 verändert wird.

Fig. 3 zeigt diese Beziehung besonders deutlich, indem dort fünf verschiedene Stellungen D, E, F, G und H des Präparats 25 dargestellt sind. In der Fig. 3 entspricht die von rechts zweite Stellung E des Präparats 25 der symmetrischen Stellung, d.h. Einfallswinkel gleich Ausfallswinkel, $\Psi$ = 0, $\vartheta$ = $\vartheta_0$. Die Stellung D rechts von dieser liegt im positiven $\Psi$-Bereich, die übrigen F, G und H im negativen. Für spannungsfreie Proben 25 gilt, daß alle Winkel $\phi$ und somit alle Geraden 35 gleich sind. Der Fokussierungskreis 15 durchfährt bei einer Drehung also den primären Röntgenstrahl 13 und schneidet diesen dabei unter verschiedenen Winkeln. Hierdurch kann der Einfallswinkel $\Psi$ des primären Röntgenstrahls 13 auf die Probe 25 innerhalb der möglichen Grenzen variiert werden.

Wie bereits ausgeführt, dient ein Film 31 der Registrierung des reflektierten Röntgenstrahls 34. In Umfangrichtung des Fokussierungskreises 15 ist der Film 31 etwas länger als zur Messung nötig. Die Probe 25 liegt tangential am Fokussierungskreis 15 an. Beide, Probe 25 und Film 31 sind auf den Hebeln 22 und 23 um den Mittelpunkt des Fokussierungskreises 15 angeordnet, wodurch gewährleistet ist, daß diese exakt auf bzw. am Umfang des Fokussierungskreises 15 liegen.

Zur Messung wird der dritte Hebel 23 auf den doppelten Wert des Beugungswinkels $\vartheta$ eingestellt und über das Feststellelement 32 mit dem ersten Hebel 18 verbunden. Der die Probe 25 tragende zweite Hebel 22 wird von der Führungsschiene 17 derart geführt, daß die Probe 25 bei Drehung des Fokussierungskreises um das erste Gelenk 14 stets im Röntgenstrahl 13 bleibt.

Als Bezugspunkt jeder Messung dient der symmetrische Fall, d.h. Einfalls- und Reflexionswinkel zur Oberfläche der Probe 25 sind gleich. Dabei wird die Lage des Reflexes 34 der Netzebenen parallel zur Oberfläche der Probe 25, welche $d_n$ entspricht, auf dem Film 31 markiert. Hierzu wird das Präparat 25 auf den Beugungswinkel $\vartheta$ gefahren und die erste Belichtung vorgenommen. Anschließend wird der Mittelpunkt des Fokussierungskreises 15, also das zweite Gelenk 21 um den Betrag des Neigungswinkels $\Psi$ um das erste Gelenk 14 geschwenkt. Dabei ändert sich der Einfallswinkel des Röntgenstrahls 13 auf die Probe 25 um den gleichen Betrag. In der Regel werden vier solcher Messungen vorgenommen, um genügend Sicherheit für die Auswertung zu bekommen. Die Differenzen der Reflexlagen zur Lage des Reflexes bei symmetrischer Aufstellung werden in Millimeter gemessen und anhand der Geometrie in Differenzen der Beugungswinkel $\Delta\vartheta$ umgerechnet und daraus mittels der Gleichung $\Delta d/d_0 = - \mathrm{ctg}\, \vartheta \Delta\vartheta$ die relativen Gitteränderungen, bezogen auf die symmetrische Aufstellung, errechnet. Diese Gleichung kann durch Differentiation aus der Braggschen Beziehung gewonnen werden.

Als Primärfokus kann der Linienfokus einer Feinfokusröhre benutzt werden, wobei Sollerblenden die Querdivergenz begrenzen.

Als Primärfokus ist es denkbar, den Drehpunkt des Fokussierungskreises 15 in den Fokus eines fokussierenden Einkristalls zu legen. Die Querdivergenz wird dann durch einen Monochromator automatisch begrenzt.

Schließlich ist es möglich, statt der Feinfokusröhre eine Breitfokusröhre zu verwenden, welche einen feinen Spalt beleuchtet, der genau im Drehpunkt, also im Fokussierungspunkt des Fokussierungskreises 15 sitzt. Die Querdivergenz wird ebenfalls durch eine oder mehrere Sollerblenden begrenzt.

Die Probe 25 weist in der Regel keine dem Fokussierungskreis 15 entsprechende Oberflächenkrümmung auf, sondern eine ebene Oberfläche, die tangential an den Fokussierungskreis 15 angelegt ist. Sind die Proben 25 kreisrund, so können Abweichungen vom Fokussierungskreis 15 sowohl eine Verbreiterung als auch eine Verschiebung des Reflexmaximums ergeben. Bei der Differenzbildung heben sich diese Verschiebungen jedoch heraus.

Bei der Wahl der Registriereinrichtung bzw. der Meßvorrichtung 28 ist zu berücksichtigen, daß die Strahlen 34 normalerweise geneigt zum Fokussierungskreis 15 einfallen.

Festkörperdetektoren mit geringer Eindringtiefe können auch zur Registrierung verwendet werden. Der Zählspalt wird dann längs des Fokussierungskreises 15 geführt und dabei auf die Probe 25 ausgerichtet. Dies erfordert eine aufwendige Mechanik und sehr präzise und reproduzierbare Einstellungen. Streustrahlung aus anderen Teilen kann dabei allerdings gut abgeschirmt und die Meßergebnisse können mit einem nachgeordneten Computer ausgewertet werden. Vier Grad Drehung um den Mittelpunkt des Fokussierungskreises 15 entsprechend dabei 1° in $\vartheta$. Ortsempfindliche Detektoren, OED oder PSD (Position Sensitive Detector) auf Festkörperbasis sind ebenfalls geeignet.

Die einfachste und preiswerteste Lösung ist jedoch die Registrierung mit einem Film 31. Gängige Feinstrukturfilme sind verwendbar. Bei sehr schrägem Einfall kann eine Emulsionsschicht verwandt werden. Bei der Messung werden alle Aufnahmen der verschiedenen $\Psi$-Stellungen auf einem Film aufgenommen. Um ein Überschneiden der Reflexe 34 zu vermeiden und sie auseinanderhalten zu können, kann der Film zwischen den Aufnahmen um z.B. 3/4 der Reflexlänge senkrecht zum Fokussierungskreis 15 verschoben werden. Durch eine Schlitzblende mit z.B. 10 mm Höhe kann nur ein Ausschnitt eines Debyekegels den Film 31 treffen. Die Lage der symmetrischen Einstellungen wird als Reflexlinie zweimal aufgenommen und zwar am Ende des in Fig. 1 oberen und unteren Randes des Films 31, so daß die anderen Reflexe dazwischenliegen. Die Differenz der Beugungslinien kann dann unter einem Meßmikroskop prinzipiell auf genauer als z.B. 0,05 mm vermessen werden. Die Filmmethode macht eine fotografische Behandlung und Vermessung notwendig. Letztere könnte durch die Registrierung der Schwärzung mit einem Mikrodensitometer und der Auswertung durch z.B. einem nachgeordneten Computer ersetzt werden. Der Vorteil der Filmmethode liegt darin, daß man nicht nur summarisch quer zu dem Debyekegel mißt, sondern auch dessen Struktur erkennen kann. Dies ist dann von großer Wichtigkeit, wenn das Material grobkörnig ist, da dann die Lagen der Reflexe von einzelnen großen Kristallen bestimmt werden, welche nur selten im Durchschnitt aller Kristalle der $\Psi$-Einstellung entsprechen, so daß man fehlerhafte Werte erhält.

Der Winkeldekodierer 20 des Motors 19 dreht den ersten Hebel 18. Wird bei einer Drehung die Nähe eines vorbestimmten Winkels erreicht, dann wird die Geschwindigkeit durch die nicht dargestellte Steuereinrichtung reduziert. Beim Erreichen des Winkels wird die Luftzufuhr der Luftlagerung unterbrochen. Der dritte Hebel 23 wird mit Hilfe der auf der Grundplatte 11 befestigten Winkelgravur 33 per Hand auf den doppelten Wert des Beugungswinkels $\vartheta$ eingestellt und mittels dem Feststellelement 32 gesichert. Der zweite und dritte Hebel 22 und 23 sind derart zueinander angeordnet, daß der Film 31 über die Röntgenstrahlungsquelle 12 hinweggeschwenkt werden kann. Das bedeutet, daß der "negative" $\Psi$-Bereich für die Aufnahmen verwendet werden kann. Zur Winkeleinstellung einer bestimmten Messung wird vom Beugungswinkel $\vartheta$ der Neigungswinkel $\Psi$ abgezogen. Dieser Bereich ist gegenüber dem "positiven" dadurch ausgezeichnet, daß er größer ist und die Reflexe 34 nicht so schräg auf den Film 31 einfallen.

Der zweite Hebelarm 22 kann, von kleineren Beugungswinkeln $\vartheta$ kommend, nur bis zu einem Beugungswinkel von 90° fahren. An dieser Stelle befindet sich ein nicht dargestellter Anschlag, der zur Justierung des Meßgeräts im Röntgenstrahl 13 und zur Einstellung des Winkeldekoders 20 dient. Obwohl es nicht vorgesehen ist, können positive Neigungswinkel $\Psi$ bei hohen Beugungswinkeln $\vartheta$ in dem hierdurch beschränkten Bereich angefahren werden.

Zur Justierung des Spannungsmeßgeräts wird ein Beugungswinkel $\vartheta$ von 90° angefahren und der Röntgenfokus der Röntgenstrahlungsquelle 12 möglichst genau über dem Drehpunkt des Fokussierungskreises 15, d.h. des ersten Gelenks 14 justiert. In den Mittelpunkt des Fokussierungskreises 15, d.h. auf das zweite Gelenk 21 wird eine nicht dargestellte feine Blende und auf den Halter 24 der Probe 25 ein Leuchtschirm angeordnet, der genau die Mitte des Präparats 25 markiert. Wie bereits erwähnt, weist die Röntgenstrahlungsquelle 12 nicht dargestellte Justierschrauben auf, mit welchen das Bild der Blende genau auf die Mitte der Probe 25 eingestellt werden kann. Hiermit sind der Primärfokus und der Drehpunkt des Fokussierungskreises 15 parallel zum Röntgenstrahl 13 justiert. Diese Justierung ist für die Winkelmessung wichtig. Die Justierung senkrecht hierzu bestimmt lediglich die Schärfe des Reflexes, d.h., wie gut der Reflex 34 auf dem Fokussierungskreis 15 liegt. Zur Justierung in dieser Richtung können von einem Präparat 25 mit scharfen Reflexen Aufnahmen bei verschiedenen Stellungen der nicht dargestellten Justierschrauben gemacht werden. Die verschiedenen Stellungen sind reproduzierbar, so daß der Aufnahme mit dem schärfsten Reflex 34 dann die richtige Einstellung entspricht.

Zur eigentlichen Messung wird ein Präparat 25 auf dem Halter 24 befestigt. Der Film 31 wird in eine lichtdichte Umhüllung gesteckt und auf der Halterung 30 befestigt, so daß der Film 31 fest an der Fläche der Halterung 30 anliegt, welche entsprechend dem Fokussierungskreis 15 gekrümmt ist. Anschließend wird der dritte Hebel 23 gelockert und per Hand auf den Wert des doppelten Beugungswinkels $\vartheta$ geschoben und dort gegenüber dem ersten Hebel 18 befestigt. Mittels der elektronischen Steuereinrichtung fährt nun der zweite Hebel 22 auf den Wert $\vartheta$ des Beugungswinkels. Die Steuervorrichtung sorgt dafür, daß der Film automatisch dabei an das obere Ende der Halterung 30 in Pfeilrichtung C in Fig. 1 fährt, bevor die erste Belichtung erfolgt. Danach fährt der Film 31 durch die Steuerung für die zweite Belichtung an das andere Ende. Hierdurch sind die Referenzlinien markiert.

Für Aufnahmen mit geneigter Oberfläche der Probe 25 muß nun der Fokussierungskreis 15 zu niedrigeren Winkeln gefahren werden. Die Grenze ist durch den Kontakt des zweiten Hebels 22 mit der nicht dargestellten Sollerblendenhalterung für den primären Röntgenstrahl 13 gegeben. Dies ist etwa bei $\vartheta = 17°$. Normalerweise, bei einem Beugungswinkel $\vartheta > 60°$, kann mit einem kleinsten Begrenzungswinkel von 20° gearbeitet werden. Für diesen Wert kann ein Begrenzungskontakt vorhanden sein. Die Differenz des Beugungswinkels $\vartheta$ mit dem Begrenzungswinkel ergibt den zur Verfügung stehenden $\Psi$-Bereich mit $\Psi_{max}$, der entsprechend gleicher Teilung seines $\sin^2\Psi$ in vier Teile $\Psi_1$ bis $\Psi_4$ aufgeteilt werden kann, wobei $\Psi_4$ gleich $\Psi_{max}$ ist. Der Wert $\vartheta - \Psi_1$ wird nun in die Steuereinrichtung eingegeben und nach Erreichen der entsprechenden Winkelstellung kann die Aufnahme für $\Psi_1$ gemacht werden. Für die anderen Stellungen wird entsprechend verfahren. Nach dem Entwickeln, Fixieren und Trocknen des Filmes kann dieser unter einem Mikroskop vermessen werden.

Mit dem Spannungsmeßgerät können auch andere Messungen durchgeführt werden. Z.B. können genaue Gitterkonstanten bestimmt werden, wenn eine Vergleichsprobe mit einem Reflex nahe dem zu messenden vorhanden ist. Sie ist immer dann möglich, wenn die Probe 25 sicher und reproduzierbar an die Referenzfläche der Halterung 24 der Probe 25 anzulegen ist. Die erreichbare Unsicherheit in $\Delta d/d$ liegt bei 15 bis 90 ppm. Diese Werte sind so gering, daß es sinnvoll erscheint, für eine konstante Temperatur während der Aufnahme zu sorgen, damit durch Temperaturschwankungen keine Linienverbreiterung entsteht.

Eine weitere Anwendungsmöglichkeit des Spannungsmeßgeräts 10 ist die Untersuchung einer Textur. Zum einen kann man die Textur bestimmen, wie sie der Debyekegel zeigt, wenn man die Streustrahlenblende entfernt (konventionelle Rückstrahlmethode, jedoch mit der Möglichkeit veränderbarer $\Psi$-Werte). Die andere ist dadurch gegeben, daß man das Präparat 25 wie bei der Spannungsmessung verschiedene $\Psi$-Winkel anfah-

ren läßt und dabei die Intensität eines bestimmten Reflexes 34 bei diesen verschiedenen Neigungswinkeln Ψ vergleicht. Gegenüber konventionellen derartigen Methoden kann vorteilhaft die Größe der zu untersuchenden Fläche leicht variiert werden, die während der Untersuchung konstant bleibt.

Zur Aufnahme von Seemann-Bohlin-Diagrammen könnte ein Halter 30 des Films 31 vorgesehen sein, der sich den verschiedenen Einstellungsmöglichkeiten des Neigungswinkels Ψ anpassen läßt. Der kleinste erfaßbare Beugungswinkel ϑ könnte bei ca. 10° liegen. Selbst bei der Einstellung mit dem schrägsten Einfall des Röntgenstrahls 13 auf das Präparat 25 läßt sich noch der Winkelbereich bis ϑ = 75° erfassen. Die Kallibrierung des Films 31 könnte dann in bekannter Weise durch Kerben erfolgen.

Die Halterung 24 des Präparats 25 könnte ferner mit einer Heizvorrichtung versehen sein. Hiermit könnte die thermische Ausdehnung einer unverspannten Probe 25 mit einer Genauigkeit, wie sie bislang noch nicht verwirklicht wurde, bestimmt werden. Auch könnte die Spannung als Funktion der Temperatur einer Probe 25 bestimmt werden. Damit kann dann ein weiterer Parameter der Probeneigenschaften untersucht werden, der vor allem Auskunft über die Ursache der Spannungen geben kann. Außerdem ist es mit einer solchen Messung möglich, den Youngschen Modul zu bestimmen.

Präparate 25 mit sehr scharfen Reflexen 34 bilden bei großem Abstand zwischen Primärfokus bei 14 und Präparat 25 die Strahlenverteilung des Fokus und bei kleinem Abstand den Schatten der nicht dargestellten Sollerblende auf dem Film 31 ab. Dies kann durch eine geringfügige Auf- und Abbewegung des Filmes 31 während der Aufnahme durch die Steuervorrichtung der Meßvorrichtung 28 verschmiert werden, so daß glatte und leichter zu vermessende Linien entstehen.

Präparate 25 mit großen Kristalliten ergeben ebenfalls keine einheitlichen Reflexe 34, da die Reflexe 34 der Kristallite einzeln zu sehen sind. Diese haben nur in seltenen Fällen auch die Reflexlagen des Durchschnittes aller Kristallite, so daß die Reflexlinien nicht nur gepunktet sondern auch noch gewellt sind. Dies kann verbessert oder sogar verhindert werden, wenn das Präparat bei einer Aufnahme um einige Grad über die Halterung 24 oszilliert. Zwar wird hierdurch der Einfallswinkel unscharf, doch ist diese Unschärfe im Vergleich mit dem Gewinn das kleinere Übel. Dieses Verschwenken während der Aufnahme kann im Prinzip auch durch den vorhandenen Motor 19 über eine entsprechende Steuerung realisiert werden.

Die in der vorstehenden Beschreibung, in den Fig. 1, 2 und 3 sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Röntgenographisches Spannungsmeßgerät mit fokussierender Reflexion eines divergenten Röntgenstrahls durch polykristallines Material mit einer Röntgenstrahlenquelle, einer Probe diesen Materials und einer Meßvorrichtung auf einem Fokussierungskreis, dadurch gekennzeichnet, daß auf einer ebenen Grundplatte (11) am Ende einer Führungsschiene (17) ein erstes Gelenk (14) zum Verschwenken eines ersten Hebels (18) in dieser Ebene angeordnet ist, der seinerseits über ein zweites Gelenk (21) einen zweiten und dritten Hebel (22, 23) gleichermaßen verschwenkbar anlenkt, wobei am jeweils anderen Ende der zweite Hebel (22) die Probe (25) und der dritte Hebel (22) die Meßvorrichtung (28) trägt, der dritte Hebel (23) mit dem ersten Hebel (18) in einem bestimmten Winkel fest verbindbar und der zweite Hebel (22) entlang der Führungsschiene (17) gleitend verschiebbar ist, so daß der Einfallswinkel Ψ des zur Führungsschiene (17) parallelen und oberhalb des ersten Gelenks (14) fokussierten Röntgenstrahls (13) auf der Probe (25) variiert und die Lage des Reflexes (34) auf der Meßvorrichtung (28) das Meßergebnis anzeigt.

2. Meßgerät nach Anspruch 1, dadurch gekennzeichnet, daß die Grundplatte (11) eine polierte Granitplatte ist, daß zweite Gelenk (21) und der zweite und dritte Hebel (22, 23) über Stützen mittels einer Luftlagerung auf der Grundplatte (11) durch Drehung eines Motors (19) mit einem Winkelkodierer (20), gesteuert von einer Steuervorrichtung, gleitet und beim Erreichen der vorbestimmten mit abgestufter Geschwindigkeit angefahrenen Position die Steuervorrichtung die Luftzufuhr unterbricht, wodurch die Hebel (18, 22, 23) sich direkt auf der Grundplatte (11) abstützen.

3. Meßgerät nach Anspruch 2, dadurch gekennzeichnet, daß über dem ersten Gelenk (14) der Primärfokus eine einige Millimeter lange und scharfe Linie der Röntgenstrahlenquelle (12) ist, welche feinjustierbar zum Drehpunkt des ersten Gelenks (14) befestigt ist und der Röntgenstrahl (13), der eine Querdivergenz orthogonal zur Grundplatte (11) aufweist und eine Divergenz von einigen Grad nicht überschreitet, auf die Probe (25) gerichtet ist, die in Richtung des zweiten Hebels (22) weisend auf dessen äußeren Ende an einer Halterung (24) befestigt ist, daß der zweite Hebel (22) über eine Feder (27) gegen die Führungsschiene (17) ausgelenkt ist und eine dem Radius des Fokussierungskreises (15) entsprechende Länge aufweist.

4. Meßgerät nach Anspruch 3,
dadurch gekennzeichnet, daß der Primärfokus als Fokussierungsschlitz für ungebündelte Röntgenstrahlen (13) einer Breitfokusröntgenröhre hoher Belastbarkeit mit Sollerblenden zur Begrenzung der Querdivergenz ausgebildet ist.

5. Meßgerät nach Anspruch 3,
dadurch gekennzeichnet, daß die Fokussierungslinie des Primärfokus der Elektronenstrahlfokus auf der Anode einer Feinfokusröntgenröhre mit Fokusbreite von etwa 0,8 mm verwendet wird, bei gleichzeitiger perspektivischer Verkürzung unter einem Aufsichtswinkel von weniger als 6° und Begrenzung der Divergenz durch Sollerblenden.

6. Meßgerät nach Anspruch 3,
dadurch gekennzeichnet, daß der Primärfokus der Fokus eines Röntgenmonochromators ist.

7. Meßgerät nach Anspruch 3,
dadurch gekennzeichnet, daß die Probe (25), also ein ebenes Blech, ein ebener massiver Block oder dünne Schichten auf einem Substrat, tangential am Fokussierungskreis (15) anliegt und mit einem geeigneten Röntgenstrahl (13) (Cu, Ni, Co, Fe, Cr, Mo) bestrahlt wird, der einen Reflex mit einem Beugungswinkel $\vartheta$ von über 45° möglichst nahe 90° zeigt.

8. Meßgerät nach Anspruch 7,
dadurch gekennzeichnet, daß die Meßvorrichtung (28) eine orthogonal zur Grundplatte (11) über die Steuervorrichtung verschiebbare Halterung (30) für einen fotografischen, der Krümmung des Fokussierungskreises (15) angepaßten dünnen Film (31) mit einer Länge von 1 bis 2° des Beugungswinkels $\vartheta$ aufweist und je Belichtung zur Grundplatte (11) entsprechend verschiebbar ist.

9. Meßgerät nach Anspruch 7,
dadurch gekennzeichnet, daß die Meßvorrichtung (28) einen Röntgenquantenzähler aufweist, dessen Zählschlitz in Richtung der Probe (25) zeigt, unter Beachtung, daß 4° auf dem Fokussierungskreis (15) 1° des Beugungswinkels $\vartheta$ entsprechen.

10. Meßgerät nach Anspruch 8 oder 9,
dadurch gekennzeichnet, daß auf der Grundplatte (11) eine Winkelgravur (33) angebracht ist und der zweite Hebel (22) mindestens soweit an das erste Gelenk (14) verschiebbar ist, bis ein Beugungswinkel $\vartheta$ von 17° entsteht und entgegengesetzt verschoben maximal ein größter Beugungswinkel $\vartheta$ von 90°, und daß der dritte Hebel (23) beim doppelten Wert des Beugungswinkels $\vartheta$ gegenüber dem ersten Hebel (18) über ein Feststellelement (32) arretierbar ist.

11. Meßgerät nach Anspruch 10,
dadurch gekennzeichnet, daß die Einjustierung des Meßgeräts (10) in Längsrichtung zum Röntgenstrahl (13) durch Verschieben des zweiten Hebels (22) auf einen Beugungswinkel $\vartheta$ von 90° erfolgt, wenn gleichzeitig auf dem zweiten Gelenk (21) eine Schlitzblende angeordnet ist und durch diese hindurch, durch Verstellschrauben an der Röntgenstrahlenquelle (12) ein scharfer Lichtfleck in der 90°-Position auf der Mitte der Probe (25) entsteht.

12. Meßgerät nach Anspruch 11,
dadurch gekennzeichnet, daß ein Bezugswert für einen Gitterabstand d senkrecht zur Oberfläche der Probe (25) durch Verschieben des zweiten Hebels (22) auf einen Beugungswinkel $\vartheta$, Drehen und anschließendes Arretieren des dritten Hebels (23) auf den doppelten Beugungswinkel $\vartheta$ und Belichten des Films (31) der Meßvorrichtung (28) entsteht, und daß einige weitere Aufnahmen bei Verschiebung des zweiten Hebels (22) um z.B. jeweils 10° des Beugungswinkels $\vartheta$ auswertbare Ergebnisse auf der Meßvorrichtung (28) erzeugen.

13. Meßgerät nach einem oder mehreren der vorhergehenden Ansprüche,
dadurch gekennzeichnet, daß eine Auswertung des belichteten Films (31) automatisch durch eine Bestimmung von $\Delta d_\Psi/d_0 = -\,\mathrm{ctg}\ \vartheta_0 \Delta \vartheta$ und die Steigung dieser Kurve gegen das $\sin^2 \vartheta$ bestimmt wird, wobei der Beugungswinkel $\vartheta$ dem Einfallswinkel $\Psi$ entspricht und die Spannung $\sigma$ durch die Formel $E \Delta d_\Psi/d_0(1 + \nu)$-$\sin^2 \Psi = \sigma$ gegeben ist.

14. Meßgerät nach einem oder mehreren der vorhergehenden Ansprüche,
dadurch gekennzeichnet, daß der Temperaturausdehnungskoeffizient eines Materials und die Änderung eines Spannungszustandes bestimmt werden kann, durch Aufnahmen bei gleichem Bezugswinkel $\vartheta$ und unterschiedlicher Temperatur der Probe (25), die über eine Heizung in der Halterung (24) änderbar ist.

15. Meßgerät nach einem oder mehreren der vorhergehenden Ansprüche, dadurch gekennzeichnet, daß über die Steuereinrichtung und die Halterung (24) die Probe entlang ihrer Längsachse, die orthogonal zur Oberfläche der Grundplatte (11) verläuft, während einer Aufnahme um einige Grad oszilliert.

16. Meßgerät nach einem oder mehreren der vorhergehenden Ansprüche, dadurch gekennzeichnet, daß über die Steuereinrichtung und die Halterung (24) die Probe (25) um eine Achse senkrecht zur Oberfläche der Probe (25) schwenkbar ist.

FIG.1

FIG.2

Europäisches
Patentamt

EUROPÄISCHER RECHERCHENBERICHT

Nummer der Anmeldung

## EINSCHLÄGIGE DOKUMENTE

EP 92200170.6

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | EP - A - 0 312 155 (PHILIPS) * Fig.; Spalte 4; Anspruch 1 * -- | 1 | G 01 L 1/25 G 01 N 23/20 |
| A | EP - A - 0 118 965 (TECHNISCHE HOGESCHOOL EINDHOVEN) * Zusammenfasung; Fig. 1-3 * -- | 1 | |
| A | EP - A - 0 118 932 (PHILIPS) * Zusammenfassung; Fig. * | 1 | |
| D | & EP-B1-0 118 932 -- | | |
| A | FR - A - 1 500 772 (CHIRANA PRAHA NARODNI PODNIK) * Gesamt * | 1 | |
| D | & DE-B-1 245 164 ---- | | |

RECHERCHIERTE
SACHGEBIETE (Int. Cl⁵)

G 01 L 1/00
G 01 L 23/00

Der vorliegende Recherchenbericht wurde für alle Patentansprüche erstellt.

| Recherchenort | Abschlußdatum der Recherche | Prüfer |
|---|---|---|
| WIEN | 27-04-1992 | BURGHARDT |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82